# FASCICULE DE BREVET EUROPEEN

(11) **EP 2 468 584 B1**
(45) Date de publication et mention de la délivrance du brevet: **18.09.2013**
(21) Numéro de dépôt: 11306749.0
(22) Date de dépôt: 22.12.2011
(51) Int. Cl.: B60R 25/02

(54) **Colonne de direction de véhicule automobile à dispositif d'antivol amélioré**
Lenksäule eines Kraftfahrzeugs mit verbesserter Diebstahlsicherungsvorrichtung
Steering column of an automobile with improved anti-theft device

(30) Priorité: 22.12.2010 FR 1061066
(43) Date de publication de la demande: 27.06.2012
(73) Titulaire: Fuji Autotech France SAS, 25350 Mandeure (FR)
(72) Inventeur: Tomasino, Hervé, 25600 NOMMAY (FR)
(74) Mandataire: Blot, Philippe Robert Emile

(56) Documents cités:
- EP-A1- 0 721 874
- US-A- 5 718 132
- US-A- 5 730 010
- US-A1- 2006 081 023
- US-A1- 2010 242 665

## Description

La présente invention concerne une colonne de direction de véhicule automobile, équipée d'un dispositif d'antivol amélioré.

On connaît déjà, dans l'état de la technique, une colonne de direction de véhicule automobile comportant un corps longitudinal creux dans lequel est logé un arbre de direction, et un boîtier de logement d'un dispositif d'antivol, le boîtier comportant une paroi inférieure et des parois latérales délimitant ensemble un logement pour un dispositif d'antivol.

Le boîtier est habituellement fixé sur une surface extérieure du corps, à l'aide de jambes de fixation s'étendant depuis la paroi inférieure de ce boîtier. Ces jambes de fixation définissent un jeu entre cette paroi inférieure du boîtier et la surface extérieure du corps.

Le document US-A-5730010 montre une colonne de direction d'accord avec le preambule de la revendication 1.

Un tel boîtier présente des défauts de sécurité, puisque ledit jeu rend possible l'insertion d'un levier entre le boîtier et le corps. Des personnes mal intentionnées pourraient donc ainsi arracher le boîtier, et ainsi mettre le dispositif d'antivol hors d'usage.

En variante, on peut prévoir d'obstruer ce jeu en rapportant des pièces supplémentaires ou des cordons de soudure entre le boîtier et le corps. Toutefois, de tels apports de pièces supplémentaires ou de cordons de soudure impliquent des coûts supplémentaires ainsi qu'une durée de fabrication prolongée.

L'invention a notamment pour but de remédier à ces inconvénients, en fournissant une colonne de direction dont la fixation du boîtier sur le corps est davantage sécurisée, sans nécessiter d'apport de pièces supplémentaires ou de cordons de soudure.

A cet effet, l'invention a notamment pour objet une colonne de direction de véhicule automobile, du type comportant :
- un corps longitudinal creux, dans lequel est logé un arbre de direction, et
- un boîtier, comportant une paroi inférieure et des parois latérales délimitant ensemble un logement pour un dispositif d'antivol, ce boîtier étant fixé sur une surface extérieure du corps,
   caractérisée en ce que les parois latérales s'étendent jusqu'au contact de la surface extérieure du corps, et dans laquelle :
- le corps comporte un premier orifice de passage d'un pêne du dispositif d'antivol, délimité par un premier rebord, et
- la paroi inférieure du boîtier comporte un second orifice de passage du pêne, ménagé en regard du premier orifice de passage, délimité par un second rebord.

Du fait que les parois latérales du boîtier s'étendent jusqu'au contact de la surface extérieure du corps, il ne subsiste aucun jeu entre le boîtier et le corps. Il n'est donc pas possible d'insérer un levier entre le boîtier et le corps, ni d'arracher le boîtier de cette manière.

Une colonne de direction selon l'invention peut comporter en outre l'une ou plusieurs des caractéristiques suivantes, prises seules ou selon toutes les combinaisons techniquement possibles :
- la paroi inférieure du boîtier présente une forme complémentaire à la forme de cette surface extérieure du corps, cette paroi inférieure étant fixée plaquée contre cette surface extérieure du corps ;
- la paroi inférieure du boîtier est soudée sur la surface extérieure du corps ;
- la colonne de direction comporte un manchon d'antivol solidaire de l'arbre de direction, agencé en regard des premier et second orifices de passage, présentant une surface externe munie de dents formant des butées angulaires destinées à coopérer avec le pêne du dispositif d'antivol.

Selon un second aspect, l'invention porte sur un ensemble d'une colonne de direction tel que défini ci-dessus et d'un dispositif d'antivol logé dans le boîtier.

Selon un troisième aspect, l'invention porte sur un véhicule automobile comportant un ensemble ayant les caractéristiques ci-dessus.

L'invention sera mieux comprise à la lecture de la description qui va suivre, donnée uniquement à titre d'exemple et faite en se référant aux figures annexées, parmi lesquelles :
- la figure 1 représente une vue de profil d'une colonne de direction de véhicule automobile selon un exemple de mode de réalisation de l'invention ;
- la figure 2 est une vue en coupe longitudinale de la colonne de direction de la figure 1, équipée d'un dispositif d'antivol ;
- la figure 3 est une vue en coupe transversale selon les flèches 3-3 de la colonne de direction de la figure 2.

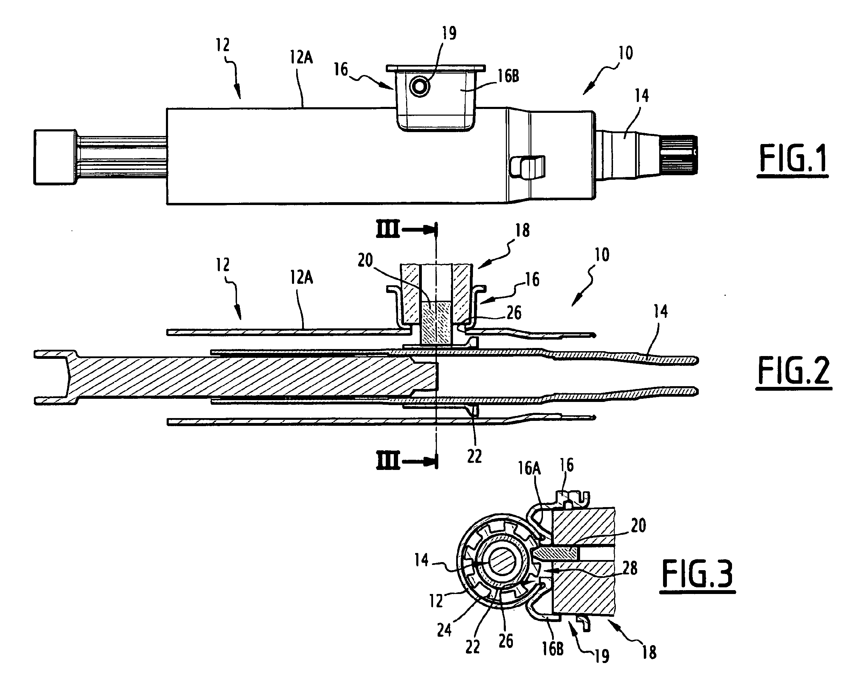

On a représenté, sur la figure 1, une colonne de direction 10, pour un véhicule automobile, selon un exemple de mode de réalisation de l'invention.

La colonne de direction 10 comporte, de manière classique, un corps longitudinal creux 12 dans lequel est logé un arbre de direction télescopique 14. Cet arbre de direction télescopique 14 est destiné à former une liaison entre un volant de direction, fixé à une extrémité arrière de l'arbre, et un système de direction, relié à une extrémité avant de l'arbre, permettant de braquer les roues du véhicule automobile.

La colonne de direction 10 comporte également un boîtier 16, fixé sur une surface extérieure 12A du corps 12. Ce boîtier 16 est par exemple réalisé en acier.

Le boîtier 16 présente comporte une paroi inférieure 16A, prolongée par des parois latérales 16B qui définissent, avec cette paroi inférieure 16A, un logement pour un dispositif 18 d'antivol de type classique.

Ce dispositif d'antivol 18 est fixé dans le boîtier 16 à l'aide de moyens classiques, par exemple par vissage à travers au moins un orifice 19 prévu à cet effet dans l'une des parois latérales 16B du boîtier 16.

Le dispositif d'antivol 18 comporte de manière classique un pêne d'antivol 20, mobile entre une position escamotée, dans laquelle ce pêne 20 est logé dans le boîtier 16, et une position déployée, dans laquelle le pêne 20 sort en saillie du boîtier 16 de manière à coopérer avec un manchon d'antivol 22 solidaire de l'arbre de direction 14.

Le manchon d'antivol 22 présente une surface externe munie de dents 24 formant des butées angulaires destinées à coopérer avec le pêne 20 lorsque ce pêne 20 est dans sa position déployée.

Afin de permettre le déploiement du pêne 20 jusqu'à ce manchon d'antivol 22, le corps 12 comporte un premier orifice 26 de passage de ce pêne 20, et la paroi inférieure 16A du boîtier 16 est munie d'un second orifice de passage 28, ménagé en regard du premier orifice de passage 26.

Avantageusement, le second orifice de passage 28 est délimité par un rebord replié de façon à s'emboîter dans le premier orifice 26, comme cela est représenté sur la figure 3. Un tel rebord replié facilite l'agencement du boîtier 16 par rapport au corps 12 lors de son montage sur ce corps 12.

Lorsque le pêne 20 est dans sa position déployée, ce pêne 20 s'étend jusqu'au manchon d'antivol 22, et il est susceptible de coopérer avec des dents 24 du manchon d'antivol 22, de manière à empêcher toute rotation de l'arbre 14. En revanche, lorsque le pêne 20 est dans sa position escamotée, l'arbre 14 est libre de se déplacer angulairement autour de son axe.

On notera que le déplacement du pêne 20 est commandé par des moyens électriques ou mécaniques de commande, de type classique.

Le boîtier 16 est conçu pour limiter les risques d'arrachement par une personne mal intentionnée. A cet effet, ses parois latérales 16B s'étendent jusqu'au contact de la surface extérieure 12A du corps 12, et sa paroi inférieure 16A présente une forme complémentaire à la forme de cette surface extérieure 12A. Ainsi, la paroi inférieure 16A est fixée plaquée contre cette surface extérieure 12A du corps 12.

De préférence, la paroi inférieure 16A du boîtier 16 est soudée sur la surface extérieure 12A, mais elle pourrait en variante y être fixée par tout autre moyen.

Ainsi, la colonne de direction 10 ne présente pas de jeu entre le boîtier 16 et le corps 12, si bien qu'il n'est pas possible d'insérer un levier entre le boîtier 16 et le corps 12 afin d'arracher ce boîtier 16.

On notera que l'invention n'est pas limitée au mode de réalisation précédemment décrit, mais pourrait présenter diverses variantes sans sortir du cadre des revendications.

## Revendications

1. Colonne (10) de direction de véhicule automobile, du type comportant :
- un corps longitudinal creux (12), dans lequel est logé un arbre de direction (14), et
- un boîtier (16), comportant une paroi inférieure (16A) et des parois latérales (16B) délimitant ensemble un logement pour un dispositif d'antivol (18), ce boîtier (16) étant fixé sur une surface extérieure (12A) du corps (12),
**caractérisée en ce que** les parois latérales (16B) s'étendent jusqu'au contact de la surface extérieure (12A) du corps (12), et dans laquelle :
- le corps (12) comporte un premier orifice (26) de passage d'un pêne (20) du dispositif d'antivol (18), délimité par un premier rebord, et
- la paroi inférieure (16A) du boîtier (16) comporte un second orifice (28) de passage du pêne (20), ménagé en regard du premier orifice de passage (26), délimité par un second rebord,
- le second rebord est replié de façon à s'emboîter dans le premier orifice (26).

2. Colonne de direction (10) selon la revendication 1, dans laquelle la paroi inférieure (16A) du boîtier (16) présentant une forme complémentaire à la forme de cette surface extérieure (12A) du corps (12), cette paroi inférieure étant fixée plaquée contre cette surface extérieure (12A) du corps (12).

3. Colonne de direction (10) selon la revendication 1 ou 2, dans laquelle la paroi inférieure (16A) du boîtier (16) est soudée sur la surface extérieure (12A) du corps (12).

4. Colonne de direction (10) selon l'une quelconque des revendications précédentes, comportant un manchon d'antivol (22) solidaire de l'arbre de direction (14), agencé en regard des premier (26) et second (28) orifices de passage, présentant une surface externe munie de dents (24) formant des butées angulaires destinées à coopérer avec le pêne (20) du dispositif d'antivol (18).

5. Ensemble d'une colonne de direction (10) selon l'une quelconque des revendications précédentes, et d'un dispositif d'antivol (18) logé dans le boîtier (16).

6. Véhicule automobile, **caractérisé en ce qu'**il comporte un ensemble selon la revendication 5.

## Patentansprüche

1. Lenksäule (10) für Kraftfahrzeug des Typs, der umfasst:
- einen hohlen länglichen Körper (12), in den eine Lenkwelle (14) eingesetzt ist, und
- ein Gehäuse (16), das eine untere Wand (16A) und Seitenwände (16B) enthält, die zusammen einen Aufnahmeraum für eine Lenkradschlossvorrichtung (18) begrenzen, wobei dieses Gehäuse (16) an einer äußeren Oberfläche (12A) des Körpers (12) befestigt ist,
**dadurch gekennzeichnet, dass** sich die Seitenwände (16B) bis zu einem Kontakt mit der äußeren Oberfläche (12A) des Körpers (12) erstrecken und wobei:
- der Körper (12) eine erste Öffnung (26) für den Durchgang eines Riegels (20) der Lenkradschlossvorrichtung (18), die durch einen ersten Rand begrenzt ist, enthält und
- die untere Wand (16A) des Gehäuses (16) eine zweite Öffnung (28) für den Durchgang des Riegels (20), die gegenüber der ersten Durchgangsöffnung (26) ausgebildet ist und durch einen zweiten Rand begrenzt ist, enthält,
- der zweite Rand in der Weise umgebogen ist, dass er in die erste Öffnung (26) eingesteckt ist.

2. Lenksäule (10) nach Anspruch 1, wobei die untere Wand (16A) des Gehäuses (16) eine Form aufweist, die zu der Form dieser äußeren Oberfläche (12A) des Körpers (12) komplementär ist, wobei diese untere Wand an dieser äußeren Oberfläche (12A) des Körpers (12) anliegend befestigt ist.

3. Lenksäule (10) nach Anspruch 1 oder 2, wobei die untere Wand (16A) des Gehäuses (16) an die äußere Oberfläche (12A) des Körpers (12) geschweißt ist.

4. Lenksäule (10) nach einem der vorhergehenden Ansprüche, die eine Lenkradschlosshülse (22) umfasst, die mit der Lenkwelle (14) fest verbunden ist und gegenüber der ersten (26) und der zweiten (28) Durchgangsöffnung angeordnet ist und eine äußere Oberfläche aufweist, die mit Zähnen (24) versehen ist, die Winkelanschläge bilden, die dazu bestimmt sind, mit dem Riegel (20) der Lenkradschlossvorrichtung (18) zusammenzuwirken.

5. Anordnung aus einer Lenksäule (10) nach einem der vorhergehenden Ansprüche und einer Lenkradschlossvorrichtung (18), die sich in dem Gehäuse (16) befindet.

6. Kraftfahrzeug, **dadurch gekennzeichnet, dass** es eine Anordnung nach Anspruch 5 enthält.

## Claims

1. Automobile steering column (10), of the type comprising:
- a hollow longitudinal body (12) in which a steering shaft (14) is housed, and
- a casing (16) comprising a lower wall (16A) and lateral walls (16B) which together delimit a housing for an anti-theft device (18), this casing (16) being fixed on an exterior surface (12A) of the body (12),
**characterised in that** the lateral walls (16B) extend as far as contact with the exterior surface (12A) of the body (12), and in which:
- the body (12) comprises a first opening (26) for passage of a bolt (20) of the anti-theft device (18), delimited by a first edge, and
- the lower wall (16A) of the casing (16) comprises a second opening (28) for passage of the bolt (20), provided opposite the first passage opening (26), delimited by a second edge,
- the second edge is folded in order to nest within the first opening (26).

2. Steering column (10) according to claim 1, in which the lower wall (16A) of the casing (16) having a shape which is complementary to the shape of this exterior surface (12A) of the body (12), this lower wall being fixed flat against this exterior surface (12A) of the body (12).

3. Steering column (10) according to claim 1 or 2, in which the lower wall (16A) of the casing (16) is welded on the exterior surface (12A) of the body (12).

4. Steering column (10) according to any of the preceding claims, comprising an anti-theft sleeve (22) which is integral with the steering shaft (14) and disposed opposite the first (26) and second (28) passage openings, having an external surface which is provided with teeth (24) forming angular limit stops which are intended to cooperate with the bolt (20) of the anti-theft device (18).

5. Assembly of a steering column (10) according to any of the preceding claims, and of an anti-theft device (18) housed in the casing (16).

6. Automobile, **characterised in that** it comprises an assembly according to claim 5.
